# EUROPEAN PATENT SPECIFICATION

(11) **EP 4 162 140 B1**
(45) Date of publication and mention of the grant of the patent: **09.12.2026**
(21) Application number: 21736787.9
(22) Date of filing: 03.06.2021
(51) Int. Cl.: E06B 9/72, H02K 7/06

(54) **MOTOR SHAFT STABILIZER**
MOTORWELLENSTABILISATOR
STABILISATEUR D'ARBRE MOTEUR

(30) Priority: 03.06.2020 US 202063033952 P
(43) Date of publication of application: 12.04.2023
(73) Proprietor: Lutron Technology Company LLC, Coopersburg, PA 18036-1299 (US)
(72) Inventor: FRIMAN, Olli T., Coopersburg, Pennsylvania 18036-1299 (US); POWELL, Garrett, Coopersburg, Pennsylvania 18036-1299 (US); BURTON, Andrew Y., Coopersburg, Pennsylvania 18036-1299 (US)
(74) Representative: AWA Sweden AB
(86) International application number: PCT/US2021/035769
(87) International publication number: WO 2021/247914

(56) References cited:
- CN-Y- 2 929 137
- CN-Y- 2 929 137
- US-A1- 2013 099 714
- US-A1- 2013 099 714
- US-A1- 2015 075 732
- US-A1- 2015 075 732

## Description

### BACKGROUND

The invention concerns a motor drive unit for rotating a roller tube about a longitudinal axis and a motorized window treatment comprising such a motor drive unit. A motorized window treatment system may include a covering material wound onto a roller tube. The covering material may include a weighted hembar at a lower end of the covering material, such that the covering material extends vertically (*e.g*., hangs) in front of a window. Motorized window treatments may include a drive system that is coupled to the roller tube to provide for tube rotation, such that the lower end of the covering material can be raised and lowered (*i.e.,* moved in a vertical direction) by rotating the roller tube. The drive system may include a motor having a drive shaft and a gear train that is operatively coupled to (*e.g.,* in communication with) the drive shaft and roller tube such that actuation of the motor causes the roller tube to rotate. The motor may be a direct current (DC) motor powered by a DC power source or an alternating current (AC) motor powered by an AC power source.

When a motor operates with a gear assembly (*e.g*., that includes helical gears), the motor and gear assembly may generate undesired noise. It may be desirable to reduce the noise produced by the motor and/or gear assembly.

US2013099714A1 describes a motorized roller shade that includes a shade tube, a motor/controller unit and a power supply unit. The motor/controller unit is disposed within the shade tube, and includes a bearing, rotatably coupled to a support shaft, and a DC gear motor. The output shaft of the DC gear motor is coupled to the support shaft such that the output shaft and the support shaft do not rotate when the support shaft is attached to the mounting bracket.

CN2929137Y describes an electric curtain rolling machine with a planetary gear transforming mounted in a tube, essentially comprising an electric motor, a planetary gear transforming and a stroke controlling mechanism, wherein the output shaft of the electric motor is immobilized, and the planetary gear transmission mechanism and the stroke controlling mechanism are rotatablely sleeved on the output shaft of the electric motor orderly also capable of rotating about the output shaft of the electric motor. The power output wheel of the planetary gear transmission mechanism is fixed in the coiling block of the curtain rolling machine and drives the coiling block of the curtain rolling machine through the rotating of the power output wheel, aiming to curl up or put down the rolling door. The utility model has the advantages of compact structure, small volume, light weight, large torque and high load capacity, or the like.

US2015075732A1 describes a motorized window treatment system that may include a roller tube, a covering material windingly attached to the roller tube, and a drive assembly that may be at least partially disposed within the roller tube. The drive assembly may include a motor having a drive shaft that is elongate along a longitudinal direction and a drive gear attached to the drive shaft such that a toothed portion of the drive gear is cantilevered with respect to the drive shaft. The drive assembly may include a gear assembly having a pair of intermediate gears on opposed sides of the drive gear. Rotation of the drive gear may be transferred through the pair of intermediate gears, a connecting gear, a planetary gear set, a cage, and an idler to the roller tube. Rotation of the roller tube may cause the covering material to move between an open position and a closed position.

### SUMMARY

The invention is defined by a motor drive unit for rotating a roller tube about a longitudinal axis, according to claim 1. Claim 10 of the invention is a motorized window treatment comprising such a motor drive unit.

As described herein, a motorized window treatment may include a roller tube, a flexible material attached to the roller tube, a motor drive unit, and/or mounting brackets configured to support respective ends of the roller tube. The roller tube may include a longitudinal axis. The motor drive unit may be disposed within a cavity of the roller tube. The motor drive unit may include a motor, a gear assembly, and a shaft stabilization member. The motor may include one or more permanent magnets that at least partially surround a rotor of the motor. The motor may include a drive shaft extending from a drive end (*e.g.*, front surface) of the motor and a rear shaft extending from a non-drive end (*e.g.*, rear surface) of the motor. The drive shaft and the rear shaft may be configured to rotate about the longitudinal axis. The gear assembly may be operatively coupled to the roller tube and the drive shaft such that actuation of the motor causes the gear assembly to rotate the roller tube. The shaft stabilization member may be operatively coupled to the rear shaft. The shaft stabilization member may be configured to dampen axial and/or radial forces in the motor drive unit. The shaft stabilization member may be a permanent mass that is configured such that a noise level of the motor drive unit is below 10 decibels (dB) at one or more operating frequencies (e.g., within a range of 300 Hz to 1 kHz).

**[0005]** The shaft stabilization member may include a first portion having a first diameter and a second portion having a second diameter. The first diameter may be greater than the second diameter. The first portion may be proximate to the motor and the second portion may be distal from the motor. The second portion may be configured to be located within a notch of a printed circuit board of the motor drive unit. The motor drive unit may include a magnet ring operatively coupled to the rear shaft. The magnet ring may be configured to direct a magnetic field toward the printed circuit board. The magnet ring may be configured to be located within the notch of the printed circuit board. The shaft stabilization member may be located on the rear shaft, for example, to enable access to one or more motor terminals extending from the motor. The motor drive unit may include one or more motor leads configured to electrically connect the motor printed circuit board to the one or more motor terminals. The shaft stabilization member may be sized and/or shaped to enable access to the one or more motor terminals. The shaft stabilization member may be magnetic. The shaft stabilization member may be configured to direct the magnetic field toward the printed circuit board.

**[0006]** The motor drive unit may include an extension configured to abut the rear shaft of the motor, for example, such that a radial force is applied to the rear shaft. The radial force may be configured to bias the rear shaft in a radial direction. The extension may extend from an inner surface of the housing of the motor drive unit. The extension may be a platform of a spring clip. The spring clip may be configured to be installed within the housing of the motor drive unit. The spring clip may be configured to dampen one or more of an axial force or a radial wobble within the motor drive unit. The spring clip may include a base from which two arms and the platform extend. The base may be concave defining edges that contact the inner surface of the housing when the spring clip abuts the rear shaft. The platform may include a pair of rounded surfaces that define a groove between the pair of rounded surfaces such that the rear shaft rests on the groove. The two arms may be curved to correspond with an inner surface of the housing of the motor drive unit. The extension and/or spring clip may be a plastic material.

[0007] A motor of a motor drive unit may include asymmetric permanent magnets. The asymmetric permanent magnets may be configured to apply a radial force to a rotor of the motor. The radial force may be configured to bias the rotor in a radial direction. The asymmetric permanent magnets may include a first permanent magnet having a first mass and a second permanent magnet having a second mass that is greater than the first mass. The first and second permanent magnets may be configured to dampen one or more of an axial force or a radial wobble within the motor drive unit. The first permanent magnet may have a first thickness and the second permanent magnet may have a second thickness that is greater than the first thickness. The first and second permanent magnets may partially surround the rotor.

### BRIEF DESCRIPTION OF THE DRAWINGS

FIG. 1 is an example motorized window treatment.
FIG. 2 is a perspective view of an example motor drive unit for use in the example battery-powered motorized window treatment shown in FIG. 1.
FIG. 3 is a detailed view of the example motor drive unit shown in FIG. 2.
FIG. 4 is a perspective view of an example motor assembly for use in the example motor drive unit shown in FIG. 2.
FIG. 5 is a front view of the example motor assembly shown in FIG. 4.
FIG. 6 is a side view of the example motor assembly shown in FIG. 4.
FIG. 7 is a cross-section view the example motor assembly shown in FIG. 4.
FIG. 8 is a perspective view of another example motor assembly for use in the example motor drive unit shown in FIG. 2.
FIG. 9 is a front view of the example motor assembly shown in FIG. 8.
FIG. 10 is a side view of the example motor assembly shown in FIG. 8.
FIG. 11 is a cross-section view the example motor assembly shown in FIG. 8.
FIG. 12 is another example motor drive unit for use in the motorized window treatment shown in FIG. 1.
FIG. 13 is a perspective view of a spring clip for use in the motor drive unit shown in FIG. 12.
FIG. 14 is a front cross-section view of an example motor for use with the motorized window treatment shown in FIG. 1.
FIG. 15 is a side cross-section view of the example motor shown in FIG. 14.
FIG. 16 is a front cross-section view of another example motor for use with the motorized window treatment shown in FIG. 1.

### DETAILED DESCRIPTION

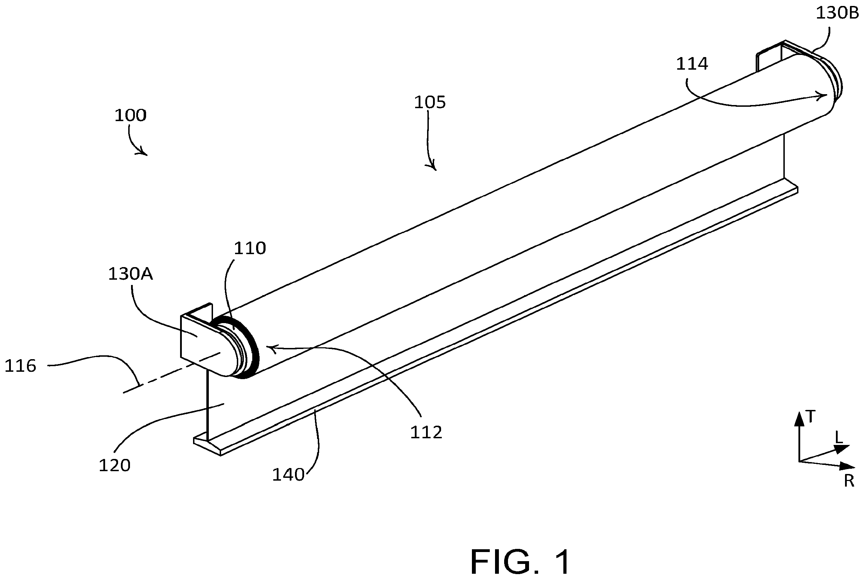

FIG. 1 depicts an example motorized window treatment 100 (*e.g.*, such as an alternating current-powered motorized window treatment system, a battery-powered motorized window treatment system, and/or the like) that includes a window treatment assembly 105 having a roller tube 110, a flexible material 120 (*e.g.*, a covering material) attached to the roller tube 110, a motor drive unit 190 at a first end 112 of the roller tube 110, and an idler (not shown) at a second end of the roller tube 110. FIG. 1 is a perspective view of the example motorized window treatment 100. The motorized window treatment 100 may include one or more mounting brackets 130A, 130B configured to be coupled to or otherwise mounted to a structure. For example, each of the mounting brackets 130A, 130B may be configured to be mounted to (*e.g.*, attached to) a window frame, a wall, or other structure, such that the motorized window treatment 100 is mounted proximate to an opening (*e.g*., over the opening or in the opening), such as a window for example. The mounting brackets 130A, 130B may be configured to be mounted to a vertical structure (*e.g*., wall-mounted to a wall as shown in FIG. 1) and/or mounted to a horizontal structure (*e.g*., ceiling-mounted to a ceiling).

The roller tube 110 may operate as a rotational element of the motorized window treatment 100 and may be elongate along a longitudinal direction L. The mounting brackets 130 may support the window treatment assembly 105 (*e.g*., rotatably support the roller tube 110 of the window treatment assembly 105). The roller tube 110 may define a longitudinal axis 116. The longitudinal axis 116 may extend along the longitudinal direction L. The mounting bracket 130 may extend from the structure in a radial direction R. The radial direction R may be defined as a direction perpendicular to the structure and the longitudinal axis 116. The flexible material 120 may be windingly attached to the roller tube 110, such that rotation of the roller tube 110 causes the flexible material 120 to wind around or unwind from the roller tube 110 along a transverse direction T that extends perpendicular to the longitudinal direction L and the radial direction R. For example, rotation of the roller tube 110 may cause the flexible material 120 to move between a raised (*e.g.*, open) position (*e.g.*, as shown in FIG. 1) and a lowered (*e.g.*, closed) position along the transverse direction T.

The roller tube 110 may be made of aluminum. The roller tube 110 may be a low-deflection roller tube and may be made of a material that has high strength and low density, such as carbon fiber. The roller tube 110 may have, for example, a diameter of approximately two inches. For example, the roller tube 110 may exhibit a deflection of less than 1/4 of an inch when the flexible material 120 has a length of 12 feet and a width of 12 feet (*e.g.*, and the roller tube 110 has a corresponding width of 12 feet and the diameter is two inches). Examples of low-deflection roller tubes are described in greater detail in U.S. Patent Application Publication No. 2016/0326801, published November 10, 2016, entitled LOW-DEFLECTION ROLLER SHADE TUBE FOR LARGE OPENINGS.

The flexible material 120 may include a first end (*e.g.*, a top or upper end) that is coupled to the roller tube 110 and a second end (*e.g.*, a bottom or lower end) that is coupled to a hembar 140. The hembar 140 may be configured, for example weighted, to cause the flexible material 120 to hang vertically. Rotation of the roller tube 110 may cause the hembar 140 to move toward or away from the roller tube 110 between the raised and lowered positions.

The flexible material 120 may be any suitable material, or form any combination of materials. For example, the flexible material 120 may be "scrim," woven cloth, non-woven material, light-control film, screen, and/or mesh. The motorized window treatment 100 may be any type of window treatment. For example, the motorized window treatment 100 may be a roller shade as illustrated, a soft sheer shade, a drapery, a cellular shade, a Roman shade, or a Venetian blind. As shown, the flexible material 120 may be a material suitable for use as a shade fabric, and may be alternatively referred to as a covering material. The flexible material 120 is not limited to shade fabric. For example, in accordance with an alternative implementation of the motorized window treatment 100 as a retractable projection screen, the flexible material 120 may be a material suitable for displaying images projected onto the flexible material 120.

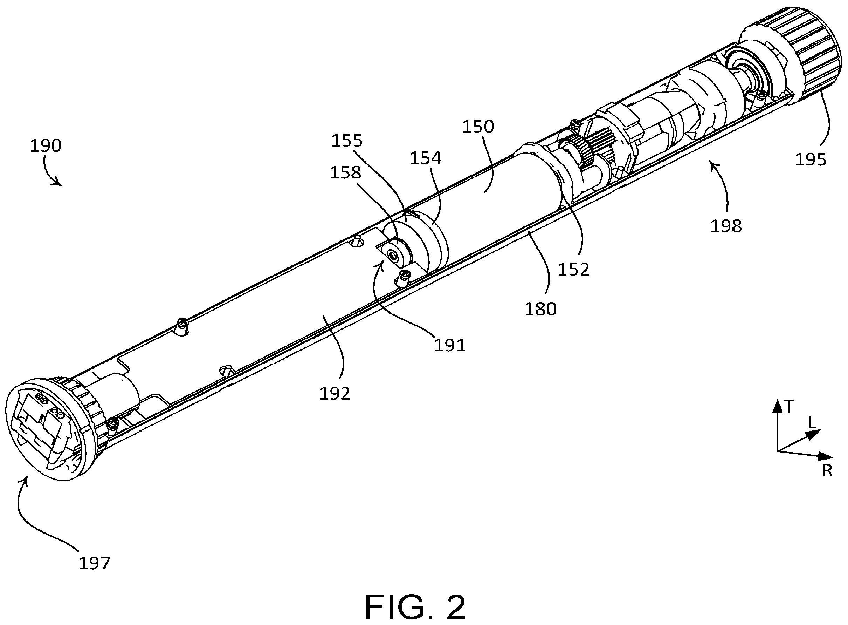

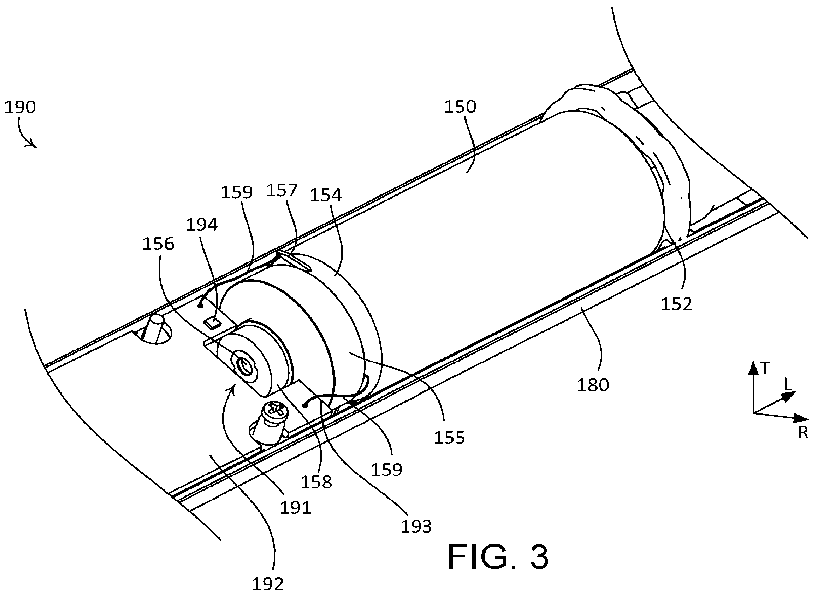

The motorized window treatment 100 may include a drive assembly (*e.g*., such as the motor drive unit 190 shown in FIGs. 2 and 3). The drive assembly may at least partially be disposed within the roller tube 110. For example, the drive assembly may be retained within a housing (*e.g*., such as housing 180 shown in FIGs. 2 and 3) that is received within the roller tube 110. The drive assembly may include a control circuit that may include a microprocessor and may be mounted to a printed circuit board. The drive assembly may be powered by a power source (*e.g*., an alternating-current or direct-current power source) provided by electrical wiring and/or batteries. The power source may be external to the motorized window treatment 100 or internal to the motorized window treatment 100 (*e.g.*, part of the window treatment assembly 105). For example, the power source may include batteries within the roller tube 110. The drive assembly may be operably coupled to the roller tube 110 such that when the drive assembly is actuated, the roller tube 110 rotates. The drive assembly may be configured to rotate the roller tube 110 of the example motorized window treatment 100 such that the flexible material 120 is operable between the raised position and the lowered position. The drive assembly may be configured to rotate the roller tube 110 while reducing noise generated by the drive assembly (*e.g*., noise generated by one or more gear stages of the drive assembly). Examples of drive assemblies for motorized window treatments are described in greater detail in commonly-assigned U.S. Patent No. 6,497,267, issued December 24, 2002, entitled MOTORIZED WINDOW SHADE WITH ULTRAQUIET MOTOR DRIVE AND ESD PROTECTION, and U.S. Patent No. 9,598,901, issued March 21, 2017, entitled QUIET MOTORIZED WINDOW TREATMENT SYSTEM.

FIGs. 2 and 3 depict an example motor drive unit 190 configured for use in a motorized window treatment (*e.g*., such as the example motorized window treatment 100 shown in FIG. 1). FIG. 2 is a perspective view of the motor drive unit 190. FIG. 3 is a detailed view of the motor drive unit 190. The motor drive unit 190 may include a housing 180. The housing 180 may be configured to enclose one or more components of the motor drive unit 190. A roller tube (*e.g.*, the roller tube 110 shown in FIG. 1) of the motorized window treatment may receive (*e.g*., at least a portion of) the housing 180.

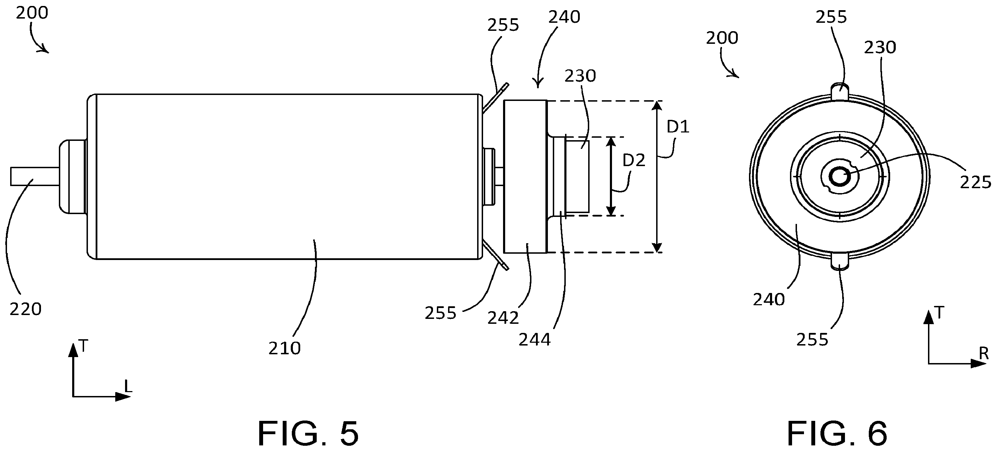

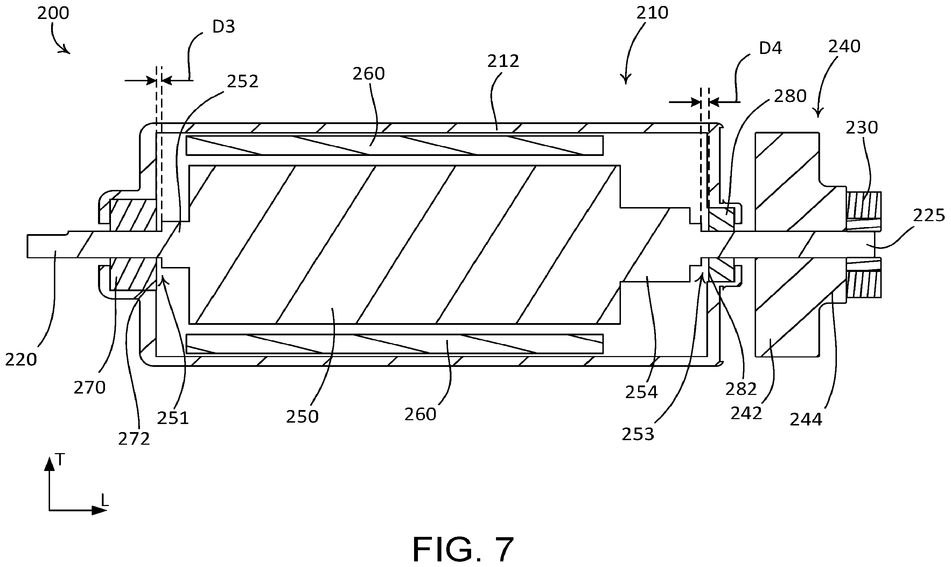

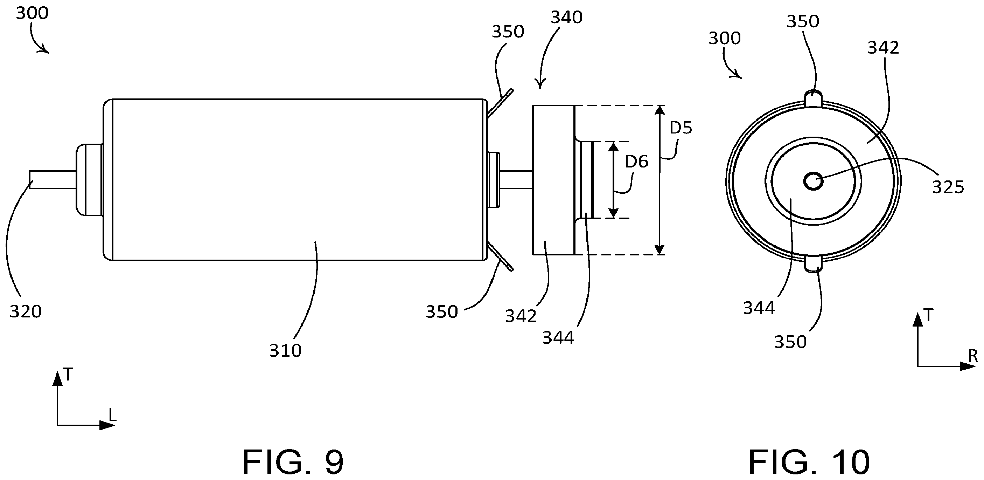

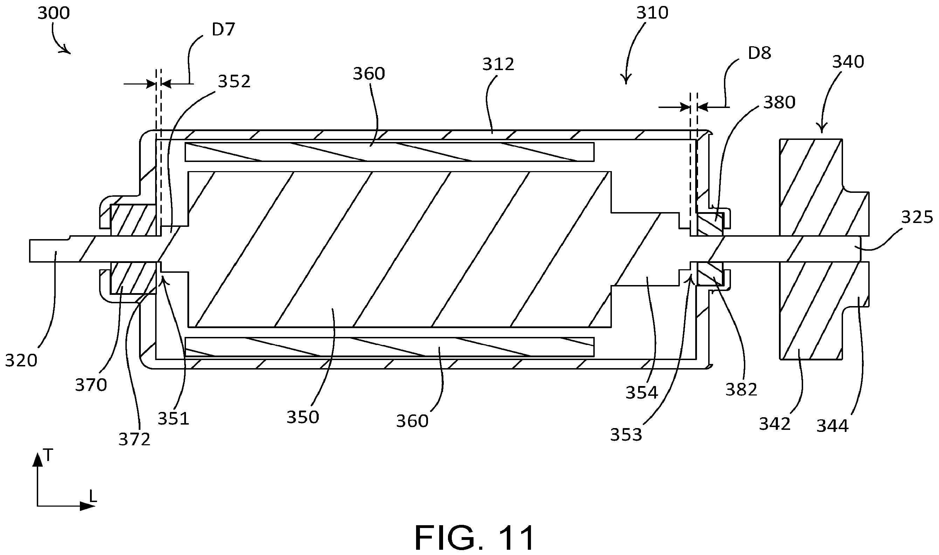

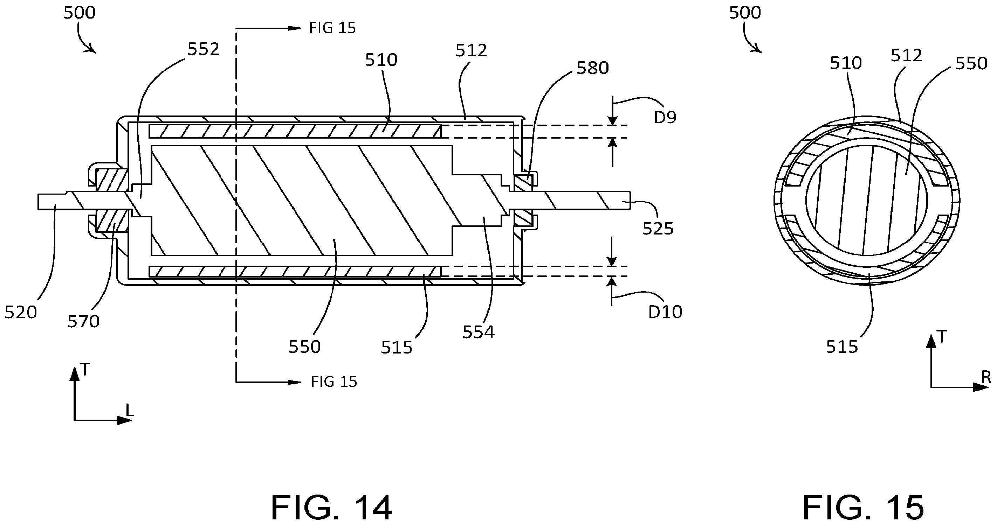

The motor drive unit 190 may include a motor 150, a printed circuit board 192, and a gear assembly 198. The motor drive unit 190 may be operatively coupled to the roller tube 110. The motor 150 may include a drive shaft (*e.g.,* such as the drive shaft 220 shown in FIGs. 5 and 7, the drive shaft 320 shown in FIGs. 9 and 11, and/or the drive shaft 520 shown in FIG. 14). The drive shaft may extend from a drive end 152 (*e.g.,* front surface) of the motor 150. The drive shaft (*e.g.,* a front shaft, not shown) may be part of a rotor (*e.g.,* such as the rotor 250 shown in FIG. 7) and may be connected to the gear assembly 198. The rotor may include a rear shaft 156 on the opposite side (*e.g*., non-drive end 154) of the motor 150. The rear shaft 156 may extend from the non-drive end 154 of the motor 150. For example, the motor drive unit 190 may include a coupler 195 (*e.g.*, a drive coupler) that may be coupled to the gear assembly 198 for rotating the coupler 195 in response to rotations of the motor 150. For example, the coupler 195 may be an output gear that is driven by the motor 150 and transfers rotation of the motor 150 to the roller tube. The coupler 195 may engage the roller tube (*e.g.*, an inner surface of the roller tube). The end portion 197 of the motor drive unit 190 may be configured to attach to (*e.g.*, be received by) the bracket 130A such that the motor 150 torques against the bracket 130A to rotate the coupler 195. The end portion 197 of the motor drive unit 190 may engage the roller tube 110 (*e.g.*, an inner surface of the roller tube 110). For example, the end portion 197 of the motor drive unit 190 may include a bearing (not shown) that enables the roller tube 110 to rotate. The roller tube 110 may rotate with the motor 150 (*e.g.*, the rotor).

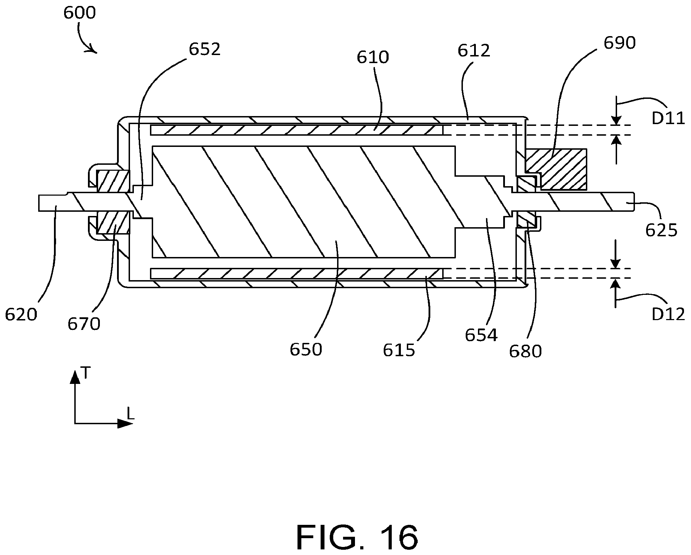

The motor drive unit 190 may generate noise while driving the roller tube 110. The noise generated by the motor drive unit 190 may be caused by one or more factors. For example, axial movement (*e.g*., in the longitudinal direction L) of one or more motor components while the motor 150 is operating may generate noise (*e.g*., additional noise) in the motor drive unit 190. In this example, the axial movement may be axial rotor/shaft oscillation where the rotor moves in the axial direction relative to a housing (*e.g*., such as the motor housing 212 shown in FIG. 7, the motor housing 312 shown in FIG. 11, the motor housing 512 shown in FIG. 14, and/or the motor housing 612 shown in FIG. 16) of the motor 150. The axial rotor/shaft oscillation may cause the drive shaft and/or the rear shaft 156 to move in the axial direction. In this example, the axial rotor/shaft oscillation may generate an axial force that is applied to the one or more motor components. Additionally or alternatively, the axial force may be an outside force that is momentary or periodic. For example, the axial force may be generated by one or more components of the motorized window treatment (*e.g*., such as an axial force generated by the gear assembly 198 and applied to the drive shaft/rotor). Additionally or alternatively, the axial force may be generated by a resonance of the motor 150 and/or radial wobble (*e.g*., radial movement of the rotor in the radial direction R and/or the transverse direction T). The resonance of the motor 150 and/or radial wobble may also generate a radial force(s) on the rotor/shaft. Alignment and/or strength of an electric field generated by a rotor winding of the rotor of the motor 150 may create the axial force and/or radial force (*e.g*., steady and fast acting forces on the rotor). The motor drive unit 190 may produce varying noise levels (*e.g*., amplitudes) when operated at different frequencies and/or when operated in different directions. It may be desirable to reduce noise (*e.g.*, the amplitude) at certain frequencies (*e.g.,* such as 800 Hz).

The motor drive unit 190 may include a shaft stabilization member 155. The shaft stabilization member 155 may be configured to reduce a noise level of (*e.g.*, generated by) the motor drive unit 190 at certain frequencies (*e.g*., approximately 300 Hz to 1 kHz). For example, the shaft stabilization member 155 may be configured such that a noise level of the motor drive unit 190 is below 10 decibels at one or more frequencies when the motor 150 is operating. The shaft stabilization member 155 may be configured to adjust a natural frequency of rotor/shaft axial oscillation (*e.g.*, to a frequency that will not be excited during operation of the motor 150). The shaft stabilization member 155 may be configured to dampen axial and/or radial force(s). For example, the shaft stabilization member 155 may add mass to the shaft and thus the rotor to dampen the axial force(s) such that the rotor moves a shorter distance (*e.g*., in the longitudinal direction L) than it would without the shaft stabilization member 155.

The rear shaft 156 of the motor 150 may carry the shaft stabilization member 155 such that the shaft stabilization member 155 rotates with the rotor, the drive shaft, and the rear shaft 156. The shaft stabilization member 155 may be, for example, a balancing mass that may be attached to the rear shaft 156. For example, the shaft stabilization member 155 may be press fit onto the rear shaft 156. The shaft stabilization member 155 may be a symmetrical mass that is configured to keep the rotor, the drive shaft, and the rear shaft 156 on the longitudinal axis. For example, the shaft stabilization member 155 may resist axial and/or radial forces on the rotor, the drive shaft, and/or the rear shaft 156 such that noise is reduced. In addition, the shaft stabilization member 155 may resist axial and/or radial movement of the rotor, the drive shaft, and/or the rear shaft 156 such that noise is reduced. Rotating the shaft stabilization member 155 may generate a moment of inertia which makes it difficult for the rotor, the drive shaft, and/or the rear shaft 155 to make small movements (*e.g*., axial and/or radial movements). For example, as the shaft stabilization member 155 rotates, its inertia may resist movement that deviates from its rotational axis. The shaft stabilization member 155 may be located between a magnet ring 158 and the motor 150, as shown in FIGs. 2 and 3. Although the shaft stabilization member 155 is shown on the rear shaft 156, it should be appreciated that the shaft stabilization member 155 may be located on the opposite side of the motor 150 (*e.g.*, on the drive or front shaft). In that case, the drive shaft may carry the shaft stabilization member 155, for example, between the motor 150 and the gear assembly 198. It should also be appreciated that the shaft stabilization member 155 may be implemented as two parts. When the shaft stabilization member 155 is implemented as two parts, the drive or front shaft may carry a first balancing mass of the shaft stabilization member 155 and the rear shaft 156 may carry a second balancing mass of the shaft stabilization member 155. It should also be appreciated that the shaft stabilization member 155 may be implemented as a part of the gear assembly 198.

The motor 150 may include one or more motor terminals 157. The motor terminals 157 may be configured to electrically connect the motor 150 to the printed circuit board 192. For example, one or more motor electrical wires 159 may electrically connect the motor terminals 157 to the printed circuit board 192. The printed circuit board 192 may be configured to receive at least a portion of the magnet ring 158 and/or the shaft stabilization member 155. For example, the printed circuit board 192 may define a notch 191 along an edge 193 that is proximate to the motor 150. The notch 191 may be configured such that the magnet ring 158 and/or the shaft stabilization member 155 extend beyond the edge 193. The notch 191 may be configured to enable angular position detection and/or rotational speed measurement, for example, via the magnet ring 158.

The magnet ring 158 may be proximate to the printed circuit board 192. The magnet ring 158 may be configured to enable detection of a position (*e.g*., an angular position) of the rear shaft 156 and/or the rotor. The magnet ring 158 may be configured to enable measurement of a rotational speed of the rear shaft 156 and/or the rotor. The magnet ring 158 may direct a magnetic field toward the printed circuit board 192, for example, as the motor 150 operates. One or more components on the printed circuit board 192 may be configured to detect the magnetic field directed from the magnet ring 158 and determine the angular position and/or the rotational speed of the rear shaft 156 and/or the rotor. For example, the motor drive unit 190 may include a rotational position sensing circuit 194 mounted to the printed circuit board 192. The rotational position sensing circuit 194 may include, for example, a magnetic sensing circuit, such as a Hall-effect sensor that may be implemented as a dual-channel Hall-effect sensor integrated circuit mounted on the printed circuit board 192. The rotational position sensing circuit 194 may detect the magnetic field generated and/or directed by the magnet ring 158.

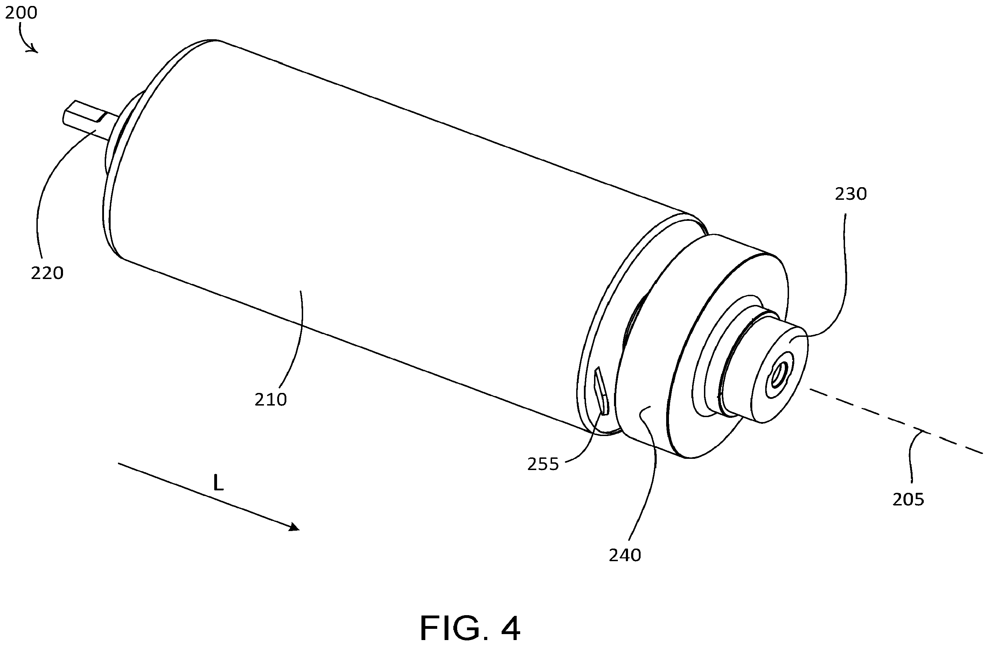

FIGs. 4-7 depict an example motor assembly 200 with a shaft stabilization member 240 (*e.g.,* such as the shaft stabilization member 155 shown in FIGs. 2-3). The motor assembly 200 may be configured to be used in a motor drive unit (*e.g.,* such as motor drive unit 190 shown in FIGs. 2 and 3) in a motorized window treatment (*e.g*., such as the motorized window treatment 100 shown in FIG. 1). The motor assembly 200 may include a motor 210, a magnet ring 230, a shaft stabilization member 240, and motor terminals 255. The motor 210 may include a motor housing 212, a rotor 250, and one or more permanent magnets 260 that surround the rotor 250. The rotor 250 may define one or more areas of reduced cross section (*e.g*., within the motor housing 212). Stated differently, the rotor 250 may include a stepped shaft, for example, within the motor housing 212. For example, the rotor 250 may define a drive-end rotor portion 252 and a non-drive-end rotor portion 254.

The rotor 250 may include a drive shaft 220 (*e.g.,* a front shaft) that extends from the drive-end rotor portion 252 (*e.g.,* through the motor housing 212) in the longitudinal direction L. The rotor 250 may include a rear shaft 225 that extends from the non-drive-end rotor portion 254 (*e.g*., through the motor housing 212) in the longitudinal direction L. The drive shaft 220 and the rear shaft 225 may rotate with the rotor 250. The drive shaft 220 may be operatively coupled to (*e.g.,* engage) a gear assembly (*e.g.,* the gear assembly 198 shown in FIG. 2) of the motor drive unit.

The motor assembly 200 may include a drive-end bushing 270 and a non-drive-end bushing 280. The drive-end bushing 270 may be configured to receive the drive shaft 220 to maintain alignment of the drive shaft 220 and/or the rotor 250. For example, the drive shaft 220 may extend through the drive-end bushing 270. The non-drive-end bushing 280 may be configured to receive the rear shaft 225 to maintain alignment of the rear shaft 225 and/or the rotor 250. For example, the rear shaft 225 may extend through the non-drive-end bushing 280. When the rotor 250 is rotating, the drive end rotor portion 252 may be configured to compensate for axial movement. For example, a distance D3 between the drive-end rotor portion 252 and a rear surface 272 of the drive-end bushing 270 and a distance D4 between the non-drive-end rotor portion 254 and a rear surface 282 of the non-drive-end bushing 280 may vary during operation of the motor 210. For example, there may be a drive-end gap 251 between the rotor 250 (*e.g.,* the drive-end rotor portion 252) and the drive-end bushing 270 and a non-drive-end gap 253 between the rotor 250 (*e.g.,* the non-drive-end rotor portion 254 and the non-drive-end rotor portion 254). The drive-end gap 251 may define the distance D3 and the non-drive-end gap 253 may define the distance D4. The distance D3 and the distance D4 may vary inversely. For example, the distance D3 may increase as the distance D4 decreases, and vice versa. The axial movement of the rotor 250 may generate noise as the motor 210 operates, for example, due to contact between the drive-end rotor portion 252 and the drive-end bushing 270 and/or contact between the non-drive-end rotor portion 254 and the non-drive-end bushing 280.

The shaft stabilization member 240 may be a symmetrical, balancing mass that is configured to keep the rotor 250, the drive shaft 220, and the rear shaft 225 aligned with the longitudinal axis when the motor 210 is operating. For example, the shaft stabilization member 240 may resist axial and/or radial forces on the rotor 250, the drive shaft 220, and/or the rear shaft 225 such that noise is reduced (*e.g*., below 10 decibels when operating). In addition, the shaft stabilization member 240 may resist axial and/or radial movement of the rotor 250, the drive shaft 220, and/or the rear shaft 225 such that noise is reduced. Rotating the shaft stabilization member 240 may generate a moment of inertia which makes it difficult for the rotor 250, the drive shaft 220, and/or the rear shaft 225 to make small movements (*e.g*., axial and/or radial movements). For example, as the shaft stabilization member 240 rotates, its inertia may resist movement that deviates from its rotational axis. For example, the shaft stabilization member 240 may reduce noise generated by the motor 210 and/or one or more other components of the motor drive unit at certain frequencies (*e.g*., approximately 300 Hz to 2.5 kHz) that may include one or more natural frequencies. The shaft stabilization member 240 may be configured to adjust a natural frequency of rotor axial oscillation (*e.g*., to a frequency that will not be excited during operation of the motor 210). For example, the shaft stabilization member 240 may be configured to reduce rotor axial motion at one or more frequencies and/or cadences (*e.g*., approximately 5 Hz to 40 Hz). The shaft stabilization member 240 may be configured to dampen axial and/or radial motion of the rotor 250, for example, caused by axial and/or radial force(s). For example, the shaft stabilization member 240 may add mass to the rear shaft 225 and thus the rotor 250 to dampen the axial force(s) such that the rotor 250 moves a shorter axial distance than it would without the shaft stabilization member 240. Rotating the shaft stabilization member 240 may generate a moment of inertia which makes it difficult for the rotor 250, drive shaft 220, and/or the rear shaft 225 to make small movements (*e.g*., axial and/or radial movements). For example, the shaft stabilization member 240 may reduce the axial and/or radial distance that the rotor 250 moves under the axial and/or radial force(s). The shaft stabilization member 240 may be configured to adjust a resonance frequency of the motor 210, for example, to avoid resonance from occurring during operation of the motor 210.

The rear shaft 225 may carry the shaft stabilization member 240 and/or the magnet ring 230. For example, the shaft stabilization member 240 may be press fit onto the rear shaft 225. The shaft stabilization member 240 may be located between the magnet ring 230 and the motor 210. The shaft stabilization member 240 may be configured and/or located on the rear shaft 225 to enable access to the motor terminals 255 for making electrical connection(s) thereto. For example, the shaft stabilization member 240 may be sized and/or shaped to enable access to the motor terminals 255.

The shaft stabilization member 240 may define a smooth outer surface. The shaft stabilization member 240 may define a circular cross-section. The shaft stabilization member 240 may define a first portion 242 having a first diameter D1 and a second portion 244 having a second diameter D2. The second diameter D2 may be less than the first diameter D1, for example, as shown in FIG. 4. Although the figures show the second diameter D2 being less than the first diameter D1, it should be appreciated that the second diameter D2 may be equal to D1. The second portion 244 (*e.g.*, the second diameter D2) may be a tapered portion that is configured to be received within a notch of a motor printed circuit board (*e.g*., such as the notch 191 of the motor printed circuit board 192 shown in FIGs. 2 and 3). For example, the second portion 244 may enable the shaft stabilization member 240 to have the mass required to dampen the radial and/or axial forces on the rear shaft 225 while fitting in a space between the motor 210 and the motor printed circuit board. The notch in the motor printed circuit board may accommodate (*e.g*., at least partially receive) the magnet ring 230 and the second portion 244. Although the shaft stabilization member 240 is shown with the first portion 242 proximate to the motor 210 and the second portion 244 distal from the motor 210, it should be appreciated that the shaft stabilization member 240 may be oriented in the opposite direction with the second portion 244 proximate to the motor 210 and the first portion 242 distal from the motor 210. Although the shaft stabilization member 240 is shown with a circular cross-section, it should be appreciated that the shaft stabilization member 240 may define alternatively shaped cross-sections for example, such as a hollow cylinder, a ring/hoop shape with a spoke system, a cross/star with uniformly spaced arms, *etc.*

Although the shaft stabilization member 240 is shown on the rear shaft 225, it should be appreciated that the shaft stabilization member 240 may be located on the drive shaft 220. Although the magnet ring 230 is shown on the non-motor side of the shaft stabilization member 240, it should be appreciated that the magnet ring 230 may be located on the rear shaft 225 between the motor 250 and the shaft stabilization member 240. When the magnet ring 230 is located on the re

The motor drive unit may generate noise while operating (*e.g*., driving the roller tube). The noise generated by the motor drive unit may be caused by one or more factors. For example, axial movement (*e.g*., in the longitudinal direction L) of the rotor 250 while the motor 210 is operating may generate noise (*e.g*., additional noise) in the motor drive unit. In this example, an axial force applied to the rotor 250 may push and/or pull the rotor 250 into contact with the drive-end bushing 270 or the non-drive-end bushing 280. The contact between the rotor 250 and the drive-end bushing 270 and/or the non-drive-end bushing 280 may be a source of added noise while the motor 210 is operating. The motor housing 212 and/or the bushing(s) 270, 280 may act as a spring, for example, when the axial force is a constant force. The rotor 250 may oscillate in the longitudinal direction L under the constant axial force, for example, with or without contact against the drive-end bushing 270 or the non-drive-end bushing 280. The axial force may be an outside force that is momentary or periodic. For example, the axial force may be generated by one or more components of the motor drive unit (*e.g*., such as the gear assembly 198 shown in FIG. 2). Additionally or alternatively, the axial force may be generated by a resonance of the motor 210 and/or radial wobble (*e.g.*, radial movement of the rotor 250). Alignment and/or strength of an electric field generated by the rotor winding of the rotor 250 may create the axial force (*e.g*., steady and fast acting forces on the rotor 250). The electric field strength and alignment may depend on geometry of the rotor 250, current in the rotor winding, and/or an angular position of the rotor 250.

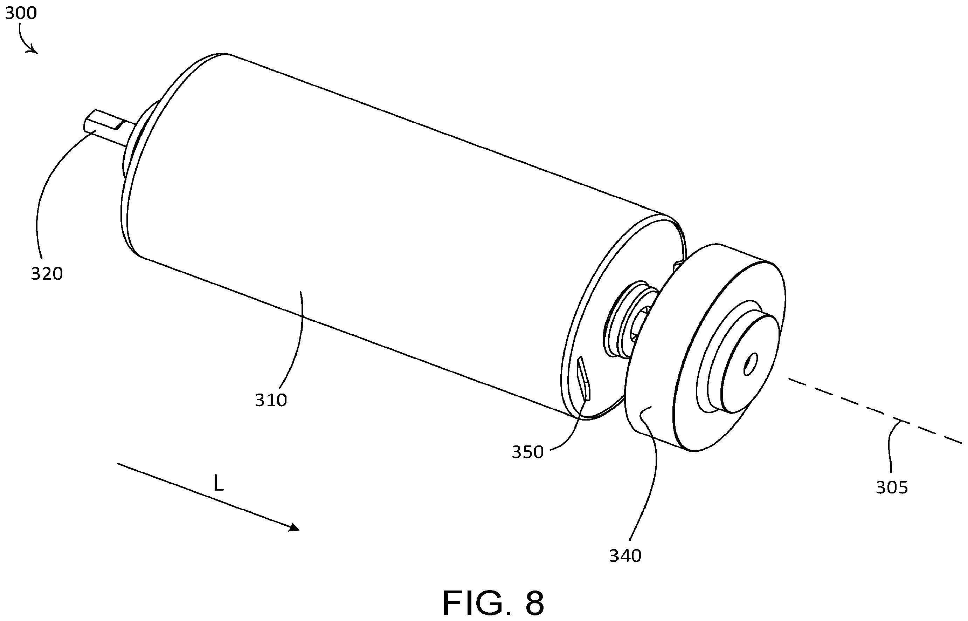

FIGs. 8-11 depict an example motor assembly 300 with another example shaft stabilization member 340. The motor assembly 300 may be configured to be used in a motor drive unit (*e.g.,* such as the motor drive unit 190 shown in FIGs. 2 and 3). The motor assembly 300 may include a motor 310, a shaft stabilization member 340, and motor leads 350. The motor 310 may include a motor housing 312, a rotor 350, and one or more permanent magnets 360 that at least partially surround the rotor 350. The rotor 350 may define one or more areas of reduced cross section (*e.g*., within the motor housing 312). Stated differently, the rotor 350 may include a stepped shaft, for example, within the motor housing 312. For example, the rotor 350 may define a drive-end rotor portion 352 and a non-drive-end rotor portion 354. The rotor 350 may define a drive shaft 320 (*e.g.*, a front shaft) that extends from the drive-end rotor portion 352 (*e.g.*, through the motor housing 312) in the longitudinal direction L. The rotor 350 may define a rear shaft 325 that extends from the non-drive-end rotor portion 354 (*e.g.*, through the motor housing 312) in the longitudinal direction L.

The motor assembly 300 may include a drive-end bushing 370 and a non-drive-end bushing 380. The drive-end bushing 370 may be configured to receive the drive shaft 320 to maintain alignment of the drive shaft 320 and/or the rotor 350. For example, the drive shaft 320 may extend through the drive-end bushing 370. The non-drive-end bushing 380 may be configured to receive the rear shaft 325 to maintain alignment of the rear shaft 325 and/or the rotor 350. For example, the rear shaft 325 may extend through the non-drive-end bushing 380. When the rotor 350 is rotating, the drive-end rotor portion 352 may be configured to compensate for axial movement. For example, a distance D7 between the drive-end rotor portion 352 and a rear surface 372 of the drive-end bushing 370 and a distance D8 between the non-drive-end rotor portion 354 and a rear surface 382 of the non-drive-end bushing 380 may vary during operation of the motor 310. For example, there may be a drive-end gap 351 between the rotor 350 (*e.g.*, the drive-end rotor portion 352) and the drive-end bushing 370 and a non-drive-end gap 353 between the rotor 350 (*e.g.,* the non-drive-end rotor portion 354) and the non-drive-end rotor portion 354. The drive-end gap 351 may be an air gap defined by the distance D7 and the non-drive-end gap 353 may be an air gap defined by the distance D8. The distance D7 and the distance D8 may vary inversely. For example, the distance D7 may increase as the distance D8 decreases, and vice versa. The axial movement of the rotor 350 may generate noise as the motor 310 operates, for example, due to contact between the drive-end rotor portion 352 and the drive-end bushing 370 and/or contact between the non-drive-end rotor portion 354 and the non-drive-end bushing 380.

The shaft stabilization member 340 may be a symmetrical, balancing mass that is configured to keep the rotor 350, the drive shaft 320, and the rear shaft 325 aligned with the longitudinal axis when the motor 310 is operating. For example, the shaft stabilization member 340 may resist axial and/or radial forces on the rotor 350, the drive shaft 320, and/or the rear shaft 325 such that noise is reduced (*e.g*., below 10 decibels when operating). In addition, the shaft stabilization member 340 may resist axial and/or radial movement of the rotor 350, the drive shaft 320, and/or the rear shaft 325 such that noise is reduced. Rotating the shaft stabilization member 340 may generate a moment of inertia which makes it difficult for the rotor 350, the drive shaft 320, and/or the rear shaft 325 to make small movements (*e.g*., axial and/or radial movements). For example, as the shaft stabilization member 340 rotates, its inertia may resist movement that deviates from its rotational axis. For example, the shaft stabilization member 340 may reduce noise generated by the motor 310 and/or one or more other components of the motorized window treatment at certain frequencies (*e.g*., approximately 300 Hz to 1 kHz) that may include one or more natural frequencies. The shaft stabilization member 340 may be configured to adjust a natural frequency of rotor axial oscillation (*e.g*., to a frequency that will not be excited during operation of the motor 310). The shaft stabilization member 340 may be configured to dampen axial force(s). For example, the shaft stabilization member 340 may add mass to the rear shaft 325 and thus the rotor 350 to dampen the axial force(s) such that the rotor 350 moves a shorter axial distance (*e.g*., in the longitudinal direction L) than it would without the shaft stabilization member 340. Rotating the shaft stabilization member 340 may generate a moment of inertia which makes it difficult for the rotor 350, drive shaft 320, and/or the rear shaft 325 to make small movements (*e.g*., axial and/or radial movements). For example, the shaft stabilization member 340 may reduce the axial and/or radial distance that the rotor 350 moves under the axial and/or radial force(s). The shaft stabilization member 340 may be configured to adjust a resonance frequency of the motor 310, for example, to avoid resonance from occurring during operation of the motor 310.

The shaft stabilization member 340 may be configured to generate and/or direct a magnetic field towards a rotational position sensing circuit on a motor printed circuit board (*e.g.*, the motor printed circuit board 192 shown in FIGs. 2 and 3). For example, the shaft stabilization member 340 may include magnetic material. For example, the shaft stabilization member 340 may combine the functionality of the shaft stabilization member 240 and the magnet ring 230 shown in FIGs. 3-6. That is, incorporating the shaft stabilization member 340 into the motor assembly 300 may reduce the number of components of the motor assembly 300 when compared to the shaft stabilization member 240 and the motor assembly 200.

The rear shaft 325 may carry the shaft stabilization member 340. For example, the shaft stabilization member 340 may be press fit onto the rear shaft 325. The shaft stabilization member 340 may be configured and/or located on the rear shaft 325 to enable access to the motor leads 350 for making electrical connection(s) thereto.

The shaft stabilization member 340 may define a first portion 342 having a first diameter D5 and a second portion 344 having a second diameter D6. The second diameter D6 may be less than the first diameter D5, for example, as shown in FIG. 8. The second portion 344 (*e.g.*, the second diameter D6) may be a tapered portion that is configured to be received within a notch of a motor printed circuit board (*e.g.*, the notch 191 on the motor printed circuit board 192 shown in FIGs. 2 and 3). The notch in the motor printed circuit board may accommodate (*e.g*., at least partially receive) the second portion 344. Although the shaft stabilization member 340 is shown with the first portion 342 proximate to the motor 310 and the second portion 344 distal from the motor 310, it should be appreciated that the shaft stabilization member 340 may be oriented in the opposite direction with the second portion 344 proximate to the motor 310 and the first portion 342 distal from the motor 310.

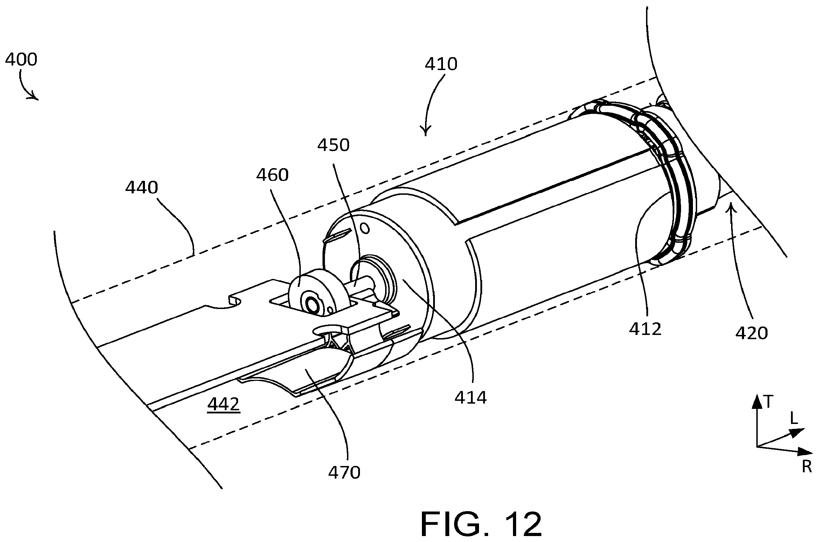

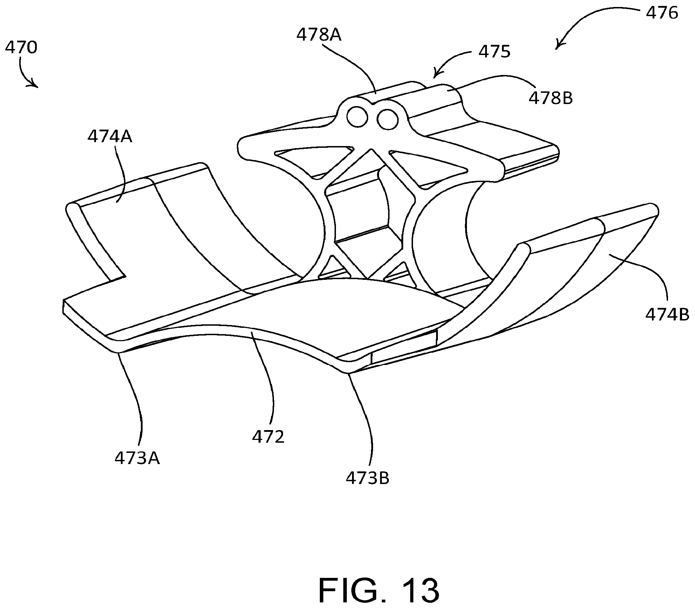

FIGs. 12-13 depict another example motor drive unit 400 having an extension (*e.g*., spring clip 470) that is configured to apply a radial force to a rear shaft 450. The motor drive unit 400 may be configured for use in a motorized window treatment (*e.g*., motorized window treatment 100 shown in FIG. 1). The motor drive unit 400 may include a housing 440 (*e.g.*, the outline of which is illustrated by the dashed lines in FIG. 12). The housing 440 may be configured to enclose one or more components of the motor drive unit 400. A roller tube (*e.g.*, the roller tube 110 shown in FIG. 1) of the motorized window treatment may receive (*e.g.*, at least a portion of) the housing 400.

The motor drive unit 400 may include a motor 410 (*e.g.*, such as the motor 150 shown in FIGs. 2-3, the motor 210 shown in FIGs. 4-7, and/or the motor 310 shown in FIGs. 8-11), a printed circuit board (*e.g*., such as the printed circuit board 192 shown in FIGs. 2 and 3), and a gear assembly 420 (*e.g.*, such as the gear assembly 198). The motor drive unit 400 may be operatively coupled to the roller tube of the motorized window treatment. For example, the motor drive unit 400 may include a coupler (not shown). The coupler may engage the roller tube (*e.g.*, an inner surface of the roller tube) such that rotation of the motor 410 is transferred to the roller tube (*e.g.*, in a similar manner as the coupler 195). The motor 410 may include a drive shaft (*e.g.*, such as drive shaft 220 shown in FIGs. 4, 5, and 7 and/or drive shaft 320 shown in FIGs. 8, 9, and 11). The drive shaft may extend from a front surface 412 (*e.g.*, drive end) of the motor 410. The motor 410 may include the rear shaft 450 that extends from a rear surface 414 (*e.g.*, non-drive end) of the motor 410.

The motor drive unit 400 may include a magnet ring 460 (*e.g.*, such as the magnet ring 158 and/or the magnet ring 230 shown in FIGs. 4-7). The rear shaft 450 may carry the magnet ring 460 which may rotate with the rear shaft 450. The magnet ring 460 may be configured to enable detection of a position (*e.g*., an angular position) of the rear shaft 450 and/or the rotor. The magnet ring 460 may be configured to enable measurement of a rotational speed of the rear shaft 450 and/or the rotor. For example, the magnet ring 460 may direct a magnetic field toward a rotational position sensing circuit on the motor printed circuit board.

The spring clip 470 may be configured to be received within the motor drive unit 400 (*e.g.,* the housing 440). The spring clip 470 may be configured to abut the rear shaft 450 at a point or location between the motor 410 (*e.g.,* the rear surface 414) and the magnet ring 460. For example, the spring clip 470 may remain in contact with the rear shaft 450 as the motor 410 operates. The spring clip 470 may be configured to apply a radial force to the rear shaft 450 of the motor 410. The radial force may be configured to bias the rear shaft 450 in a direction perpendicular to the longitudinal direction L. For example, the spring clip 470 may apply the radial force in the radial direction R and/or the transverse direction T. The spring clip 470 may be compliant (*e.g*., elastically deform) such that the spring clip 470 can be wedged between an inner surface 442 of the housing 440 and the rear shaft 450. For example, the spring clip 470 may be plastic, carbon fiber, composite material, and/or the like. Biasing the rear shaft 450 in the radial direction R and/or the transverse direction T may reduce a noise level of the motor drive unit 400 at one or more frequencies when the motor 410 is operating. For example, the noise level of the motor drive unit 400 may remain below approximately 10 dB at the one or more frequencies (*e.g*., approximately 300 kHz to 1 kHz). For example, the spring clip 470 may be configured to dampen one or more of an axial force or a radial wobble within the motor drive unit 400.

The spring clip 470 may define a base 472, arms 474A, 474B extending from the base 472, and a platform 476 extending from the base 472. The base 472 may define a concave shape with edges 473A, 473B that are configured to abut the inner surface 442 of the housing 440. For example, the edges 473A, 473B may be configured to abut the inner surface 442 of the housing 440 when the spring clip 470 abuts the rear shaft 450. The arms 474A, 474B may be curved to correspond with the inner surface 442 of the housing 440. The arms 474A, 474B may abut the inner surface 442, for example, when the spring clip 470 abuts the rear shaft 450. The concave shape of the base 472 may be configured to bias the arms 474A, 474B against the inner surface 442 of the housing 440. The platform 476 may be an extension that is configured to abut the rear shaft 450. The platform 476 may include a pair of rounded (*e.g*., convex) surfaces 478A, 478B that define a groove 475 configured to receive the rear shaft 450. Although the groove 475 is shown as a space between two cylinder shapes, it should be appreciated that the groove 475 could define alternate shapes, for example, such as circular, semi-circular, polygonal, *etc.* For example, the rear shaft 450 may abut the rounded surfaces 478A, 478B when the motor 410 operates. The radial force may be applied to the rear shaft 450 via the rounded surfaces 478A, 478B of the platform 476. For example, the size of the spring clip 470 may be configured to wedge between the rear shaft 450 and the inner surface 442 of the housing 440. The arms 474A, 474B may be captured between the motor 410 and the motor printed circuit board, for example, such that the spring clip 470 is held in place.

It should be appreciated that the spring clip 470 may be integral with the housing 440. For example, the housing 440 may define an extension (*e.g*., such as the platform 476) that is configured to abut the rear shaft 450. Additionally or alternatively, the extension may be attached (*e.g*., removably attached) to the inner surface of the housing 440.

FIGs. 14-15 depict an example motor 500 having asymmetric permanent magnets 510, 515. The motor 500 may be configured to be used in a motor drive unit (*e.g*., such as motor drive unit 190 shown in FIGs. 2 and 3) in a motorized window treatment (*e.g*., such as the motorized window treatment 100 shown in FIG. 1). The motor 500 may include a motor housing 512, a rotor 550, and one or more permanent magnets 510, 515 that at least partially surround the rotor 550. The rotor 550 may define one or more areas of reduced cross section (*e.g*., within the motor housing 512). Stated differently, the rotor 550 may include a stepped shaft. For example, the rotor 550 may define a drive-end rotor portion 552 and a non-drive-end rotor portion 554. The rotor 550 may define a drive shaft 520 that extends from the drive-end rotor portion 552 (*e.g*., through the motor housing 512) in the longitudinal direction L. The rotor 550 may define a rear shaft 525 that extends from the non-drive-end rotor portion 554 (*e.g*., through the motor housing 512) in the longitudinal direction L.

The motor 500 may include a drive-end bushing 570 and a non-drive-end bushing 580. The drive-end bushing 570 may be configured to receive the drive shaft 520 to maintain alignment of the drive shaft 520 and/or the rotor 550. For example, the drive shaft 520 may extend through the drive-end bushing 570. The non-drive-end bushing 580 may be configured to receive the rear shaft 525 to maintain alignment of the rear shaft 525 and/or the rotor 550. For example, the rear shaft 525 may extend through the non-drive-end bushing 580.

The permanent magnets 510, 515 may be asymmetric. For example, the permanent magnets 510, 515 may define half-moons having different physical characteristics. The permanent magnets 510, 515 may be the same material. Additionally or alternatively, the permanent magnets 510, 515 may be configured to generate an asymmetric magnetic field. For example, the upper permanent magnet 510 may generate a first magnetic field and the lower permanent magnet 515 may generate a second magnetic field. The first magnetic field may be different (*e.g*., greater) than the second magnetic field. The upper permanent magnet 510 may be a north magnet having a first mass and the lower permanent magnet 515 may be a south magnet having a second mass. The first mass may be greater than the second mass. The upper permanent magnet 510 and the lower permanent magnet 515 may have different thicknesses. The upper permanent magnet motor 510 may have a thickness D9 and the lower permanent magnet 515 may have a thickness D10. The thickness D9 may be greater than the thickness D10. Stated differently, the upper permanent magnet 510 may be thicker than the lower permanent magnet motor 515. The upper and lower permanent magnets 510, 515 may be configured to apply a radial force (*e.g*., between the permanent magnets 510, 515) to the rotor 550. For example, the upper and lower permanent magnets 510, 515 may generate respective magnetic fields having different magnetic forces. The different magnetic forces may result in the radial force on the rotor 550. The radial force may bias the rotor 550 from the longitudinal axis (*e.g.,* in the radial direction R and/or the transverse direction T). The radial force (*e.g.*, the asymmetric permanent magnets 510, 515) may be configured to adjust a natural frequency of rotor axial oscillation, dampen radial wobble of the rotor 550, and/or dampen axial forces on the rotor 550. The radial force may be generated by the different masses and/or thicknesses of the permanent magnets 510, 515. Although the motor 500 is shown having the upper and lower permanent magnets 510, 515, it should be appreciated that the motor 500 may include alternate magnet designs that result in unequal magnetic forces, for example, such as several half-moons on each side of the rotor 550, several strips on each side of the rotor, *etc.*

FIG. 16 depicts an example motor 600 having permanent magnets 610, 615. The motor 600 may be configured to be used in a motor drive unit (*e.g.*, such as motor drive unit 190 shown in FIGs. 2 and 3) in a motorized window treatment (*e.g*., such as the motorized window treatment 100 shown in FIG. 1). The motor 600 may include a motor housing 612, a rotor 650, and one or more permanent magnets 610, 615 that at least partially surround the rotor 650. The rotor 650 may define one or more areas of reduced cross section (*e.g*., within the motor housing 612). Stated differently, the rotor 650 may include a stepped shaft. For example, the rotor 650 may define a drive-end rotor portion 652 and a non-drive-end rotor portion 654. The rotor 650 may define a drive shaft 620 that extends from the drive-end rotor portion 652 (*e.g.*, through the motor housing 612) in the longitudinal direction L. The rotor 650 may define a rear shaft 625 that extends from the non-drive-end rotor portion 654 (*e.g.,* through the motor housing 612) in the longitudinal direction L.

The motor 600 may include a drive-end bushing 670 and a non-drive-end bushing 680. The drive-end bushing 670 may be configured to receive the drive shaft 620 to maintain alignment of the drive shaft 620 and/or the rotor 650. For example, the drive shaft 620 may extend through the drive-end bushing 670. The non-drive-end bushing 680 may be configured to receive the rear shaft 625 to maintain alignment of the rear shaft 625 and/or the rotor 650. For example, the rear shaft 625 may extend through the non-drive-end bushing 680.

The permanent magnets 610, 615 may be symmetric. For example, the permanent magnets 610, 615 may define half-moons having the same physical characteristics. The permanent magnets 610, 615 may be the same material. Additionally or alternatively, the permanent magnets 610, 615 may be configured to generate symmetric magnetic fields. For example, the upper permanent magnet 610 may generate a first magnetic field and the lower permanent magnet 615 may generate a second magnetic field. The first magnetic field may be substantially the same as the second magnetic field. The upper permanent magnet 610 may be a north magnet having a first mass and the lower permanent magnet 615 may be a south magnet having a second mass. The first mass may be substantially equal to the second mass. The upper permanent magnet 610 and the lower permanent magnet 615 may have the same thicknesses. The upper permanent magnet motor 610 may have a thickness D11 and the lower permanent magnet 615 may have a thickness D12. Alternatively, the thickness D11 may be greater than the thickness D12 similar to the permanent magnets 510, 515 shown in FIG. 14.

The motor 600 may include external magnet 690. The rear shaft 625 may be a magnetic material such that the external magnet 690 applies a magnetic force on the rear shaft 625. The magnetic force may result in a radial force applied on the rear shaft 625 and thus the rotor 650. The radial force may bias the rotor 650 from the longitudinal axis (*e.g.*, in the radial direction R and/or the transverse direction T). The radial force may be configured to adjust a natural frequency of rotor axial oscillation, dampen radial wobble of the rotor 650, and/or dampen axial forces on the rotor 650. Although the motor 600 is shown having the external magnet 690 on an upper side of the rear shaft 625, it should be appreciated that the external magnet 690 may be located on a lower side of the rear shaft 625. Although the motor 600 is shown having a single external magnet 690, it should be appreciated that the motor 600 may include multiple external magnets that result in unequal magnetic forces being applied on the rear shaft 625 and thus the rotor 650. Although the motor 600 is shown with the external magnet 690 located proximate to the rear shaft 625, it should be appreciated that the external magnet 690 may be located proximate to the drive shaft 620 (*e.g.*, between the motor 600 and the gear assembly (*e.g*., such as the gear assembly 198 shown in FIG. 2)) such that the external magnet 690 applies the magnetic force on the drive shaft 620.

Radial and/or axial dampening may be achieved using one or more other techniques. For example, a motor drive unit may include one or more magnets that are attached to an inner surface of a housing of the motor drive unit. The one or more magnets may be attached to the inner surface of the housing proximate to a rear shaft of the motor of the motor drive unit. The one or more magnets may be configured to attract or repel the rear shaft, for example, to dampen one or more radial and/or axial forces within the motor drive unit. For example, the one or more magnets may be configured to bias the rear shaft from the longitudinal direction by applying unequal magnetic fields/forces.

In examples, a motor drive unit may include a magnetic brake. The magnetic brake may be carried by a drive shaft (*e.g*., front shaft) or a rear shaft of a motor of the motor drive unit. The magnets within the magnetic brake may be arranged such that tangential linear force components from adjacent magnets apply a radial force on the drive shaft or the rear shaft. The radial force applied by the magnets within the magnetic brake may be configured to adjust a natural frequency of rotor axial oscillation, dampen radial wobble within the motor drive unit, and/or dampen axial forces within the motor drive unit.

Although features and elements are described herein in particular combinations, each feature or element can be used alone or in any combination with the other features and elements. The invention is defined by the appended claims.

## Claims

1. A motor drive unit (190) for rotating a roller tube (110) about a longitudinal axis, the motor drive unit (190) comprising:
a motor (150, 210, 310) comprising a drive shaft (220, 320, 520, 620) extending from a drive end of the motor (150, 210, 310) and a rear shaft extending from a non-drive end of the motor (150, 210, 310), the drive shaft (220, 320, 520, 620) and the rear shaft configured to rotate about the longitudinal axis;
a gear assembly (198) operatively coupled to the roller tube (110) and the drive shaft (220, 320, 520, 620) such that actuation of the motor (150, 210, 310) causes the gear assembly (198) to rotate the roller tube (110);
a magnet ring (158, 230, 460) operatively coupled to the rear shaft, the magnet ring (158, 230, 460) configured to direct a magnetic field toward a printed circuit board of the motor drive unit; and
a shaft stabilization member (155, 240, 340) operatively coupled to the rear shaft between the magnet ring (158, 230, 460) and the motor (150, 210, 310), the shaft stabilization member (155, 240, 340) configured to dampen one or more of axial or radial forces in the motor drive unit (190).

2. The motor drive unit (190) of claim 1, wherein the shaft stabilization member (155, 240, 340) comprises a first portion having a first diameter and a second portion having a second diameter, and wherein the first diameter is greater than the second diameter.

3. The motor drive unit (190) of claim 2, wherein the second portion is configured to be located within a notch of a printed circuit board of the motor drive unit.

4. The motor drive unit (190) of claim 3, wherein the magnet ring (158, 230, 460) is configured to be located within the notch of the printed circuit board.

5. The motor drive unit (190) of claim 4, wherein the shaft stabilization member (155, 240, 340) is magnetic.

6. The motor drive unit (190) of claim 1, wherein the shaft stabilization member (155, 240, 340) is a symmetrical mass that is carried by the rear shaft.

7. The motor drive unit (190) of claim 1, wherein the shaft stabilization member (155, 240, 340) is configured to generate a moment of inertia when rotated that resists one or more of radial or axial movement of the rear shaft, and wherein the shaft stabilization member (155, 240, 340) is configured such that a noise level of the motor drive unit (190) is below 10 decibels at one or more frequencies when the motor (150, 210, 310) is operating.

8. The motor drive unit (190) of claim 2, wherein the shaft stabilization member (155, 240, 340) is located on the rear shaft to enable access to one or more motor terminals extending from the motor (150, 210, 310).

9. The motor drive unit (190) claim 8, wherein the motor drive unit (190) comprises one or more motor leads configured to electrically connect the motor printed circuit board to the one or more motor terminals, and wherein the shaft stabilization member (155, 240, 340) is sized and shaped to enable access to the one or more motor terminals.

10. A motorized window treatment (100) comprising:
a roller tube (110) having a longitudinal axis;
a flexible material (120) that is attached to the roller tube (11)), the flexible material (120) operable between a raised position and a lowered position via rotation of the roller tube (110); and
a motor drive unit (190) according to any of the claims 1-9 disposed with in a cavity of the roller tube (110).

## Patentansprüche

1. Motorantriebseinheit (190) zum Drehen
eines Rollenrohrs (110) um eine Längsachse,
wobei die Motorantriebseinheit (190) Folgendes umfasst:
einen Motor (150, 210, 310), umfassend eine Antriebswelle (220, 320, 520, 620), die sich von einem Antriebsende des Motors (150, 210, 310) erstreckt, und eine hintere Welle, die sich von einem Nichtantriebsende des Motors (150, 210, 310) erstreckt, wobei die Antriebswelle (220, 320, 520, 620) und die hintere Welle ausgelegt sind, sich um die Längsachse zu drehen;
eine Getriebebaugruppe (198), die mit dem Rollenrohr (110) und der Antriebswelle (220, 320, 520, 620) wirkverbunden ist, sodass eine Betätigung des Motors (150, 210, 310) bewirkt, dass die Getriebebaugruppe (198) das Rollenrohr (110) dreht;
einen Magnetring (158, 230, 460), der mit der hinteren Welle wirkverbunden ist, wobei der Magnetring (158, 230, 460) ausgelegt ist, ein Magnetfeld in Richtung einer Leiterplatte der Motorantriebseinheit zu lenken; und
ein Wellenstabilisierungselement (155, 240, 340), das zwischen dem Magnetring (158, 230, 460) und dem Motor (150, 210, 310) mit der hinteren Welle wirkverbunden ist, wobei das Wellenstabilisierungselement (155, 240, 340) ausgelegt ist, axiale und/oder radiale Kräfte in der Motorantriebseinheit (190) zu dämpfen.

2. Motorantriebseinheit (190) nach Anspruch 1, wobei das Wellenstabilisierungselement (155, 240, 340) einen ersten Abschnitt, der einen ersten Durchmesser aufweist, und einen zweiten Abschnitt, der einen zweiten Durchmesser aufweist, umfasst, und wobei der erste Durchmesser größer als der zweite Durchmesser ist.

3. Motorantriebseinheit (190) nach Anspruch 2, wobei der zweite Abschnitt ausgelegt ist, in einer Kerbe einer Leiterplatte der Motorantriebseinheit angeordnet zu sein.

4. Motorantriebseinheit (190) nach Anspruch 3, wobei der Magnetring (158, 230, 460) ausgelegt ist, in der Kerbe der Leiterplatte angeordnet zu sein.

5. Motorantriebseinheit (190) nach Anspruch 4, wobei das Wellenstabilisierungselement (155, 240, 340) magnetisch ist.

6. Motorantriebseinheit (190) nach Anspruch 1, wobei das Wellenstabilisierungselement (155, 240, 340) eine symmetrische Masse ist, die von der hinteren Welle getragen wird.

7. Motorantriebseinheit (190) nach Anspruch 1, wobei das Wellenstabilisierungselement (155, 240, 340) ausgelegt ist, bei Drehung ein Trägheitsmoment zu erzeugen, das einer radialen und/oder axialen Bewegung der hinteren Welle entgegenwirkt, und wobei das Wellenstabilisierungselement (155, 240, 340) so ausgelegt ist, dass ein Geräuschpegel der Motorantriebseinheit (190) bei einer oder mehreren Frequenzen unter 10 Dezibel liegt, wenn der Motor (150, 210, 310) in Betrieb ist.

8. Motorantriebseinheit (190) nach Anspruch 2,
wobei das Wellenstabilisierungselement (155, 240, 340) auf der hinteren Welle angeordnet ist, um Zugang zu einer oder mehreren Motorklemmen zu ermöglichen, die sich von dem Motor (150, 210, 310) erstrecken.

9. Motorantriebseinheit (190) nach Anspruch 8, wobei die Motorantriebseinheit (190) eine oder mehrere Motorleitungen umfasst, die ausgelegt sind, die Motorleiterplatte mit der einen oder den mehreren Motorklemmen elektrisch zu verbinden, und wobei das Wellenstabilisierungselement (155, 240, 340) so bemessen und geformt ist, dass es einen Zugang zu der einen oder den mehreren Motorklemmen ermöglicht.

10. Motorisierte Fensterbehandlung (100), umfassend:
ein Rollenrohr (110), das eine Längsachse aufweist;
ein flexibles Material (120), das an dem Rollenrohr (11)) befestigt ist, wobei das flexible Material (120) durch Drehung des Rollenrohrs (110) zwischen einer angehobenen Stellung und einer abgesenkten Stellung bewegbar ist; und
eine Motorantriebseinheit (190) nach einem der Ansprüche 1-9, die in einem Hohlraum des Rollenrohrs (110) angeordnet ist.

## Revendications

1. Unité d'entraînement de moteur (190) pour la rotation
d'un tube à rouleaux (110) autour d'un axe longitudinal,
l'unité d'entraînement de moteur (190) comprenant :
un moteur (150, 210, 310) comprenant un arbre d'entraînement (220, 320, 520, 620) s'étendant d'une extrémité d'entraînement du moteur (150, 210, 310) et un arbre arrière s'étendant d'une extrémité non motrice du moteur (150, 210, 310), l'arbre d'entraînement (220, 320, 520, 620) et l'arbre arrière étant configurés pour tourner autour de l'axe longitudinal ;
un ensemble d'engrenages (198) couplé fonctionnellement au tube à rouleaux (110) et à l'arbre d'entraînement (220, 320, 520, 620) de sorte que l'actionnement du moteur (150, 210, 310) provoque la rotation de l'ensemble d'engrenages (198) du tube à rouleaux (110) ;
un anneau magnétique (158, 230, 460) couplé fonctionnellement à l'arbre arrière, l'anneau magnétique (158, 230, 460) étant configuré pour diriger un champ magnétique vers une carte de circuit imprimé de l'unité d'entraînement de moteur ; et
un élément de stabilisation d'arbre (155, 240, 340) couplé fonctionnellement à l'arbre arrière entre l'anneau magnétique (158, 230, 460) et le moteur (150, 210, 310), l'élément de stabilisation d'arbre (155, 240, 340) étant configuré pour amortir une ou plusieurs forces axiales ou radiales dans l'unité d'entraînement du moteur (190).

2. Unité d'entraînement de moteur (190) selon la revendication 1, dans laquelle l'élément de stabilisation d'arbre (155, 240, 340) comprend une première partie ayant un premier diamètre et une seconde partie ayant un second diamètre, et dans laquelle le premier diamètre est supérieur au second diamètre.

3. Unité d'entraînement de moteur (190) selon la revendication 2, dans laquelle la seconde partie est configurée pour être située dans une encoche d'une carte de circuit imprimé de l'unité d'entraînement de moteur.

4. Unité d'entraînement de moteur (190) selon la revendication 3, dans laquelle l'anneau magnétique (158, 230, 460) est configuré pour être situé dans l'encoche de la carte de circuit imprimé.

5. Unité d'entraînement de moteur (190) selon la revendication 4, dans laquelle l'élément de stabilisation d'arbre (155, 240, 340) est magnétique.

6. Unité d'entraînement de moteur (190) selon la revendication 1, dans laquelle l'élément de stabilisation d'arbre (155, 240, 340) est une masse symétrique portée par l'arbre arrière.

7. Unité d'entraînement de moteur (190) selon la revendication 1, dans laquelle l'élément de stabilisation d'arbre (155, 240, 340) est configuré pour générer un moment d'inertie lorsqu'il est en rotation qui résiste à un ou plusieurs mouvements radiaux ou axiaux de l'arbre arrière, et dans laquelle l'élément de stabilisation d'arbre (155, 240, 340) est configuré de telle sorte que le niveau sonore de l'unité d'entraînement de moteur (190) soit inférieur à 10 décibels à une ou plusieurs fréquences lorsque le moteur (150, 210, 310) est en fonctionnement.

8. Unité d'entraînement de moteur (190) selon la revendication 2,
dans laquelle l'élément de stabilisation d'arbre (155, 240, 340) est situé sur l'arbre arrière pour permettre l'accès à une ou plusieurs bornes du moteur s'étendant à partir du moteur (150, 210, 310).

9. Unité d'entraînement de moteur (190) selon la revendication 8, dans laquelle l'unité d'entraînement de moteur (190) comprend un ou plusieurs fils de moteur configurés pour connecter électriquement la carte de circuit imprimé du moteur à l'une ou plusieurs bornes du moteur, et dans laquelle l'élément de stabilisation d'arbre (155, 240, 340) est dimensionné et façonné pour permettre l'accès à l'une ou plusieurs bornes du moteur.

10. Traitement de fenêtre motorisé (100) comprenant :
un tube à rouleaux (110) ayant un axe longitudinal ;
un matériau flexible (120) qui est fixé au tube à rouleaux (110), le matériau flexible (120) pouvant être déplacé entre une position relevée et une position abaissée par l'intermédiaire d'une rotation du tube à rouleaux (110) ; et
une unité d'entraînement de moteur (190) selon l'une quelconque des revendications 1 à 9 disposée dans une cavité du tube à rouleaux (110).
